# EUROPÄISCHE PATENTSCHRIFT

(11) **EP 0 913 298 B1**
(45) Veröffentlichungstag und Bekanntmachung des Hinweises auf die Patenterteilung: **06.05.2004**
(21) Anmeldenummer: 98120430.8
(22) Anmeldetag: 28.10.1998
(51) Int. Cl.: B60R 21/16

(54) **Verfahren und Vorrichtung zum kompakten Zusammenfalten des Gassackes einer Airbag-Vorrichtung bei Fahrzeugen**
Method and device for compact folding of an airbag of an airbag device in vehicles
Procédé et dispositif pour pliage compact d'un sac gonflable d'un dispositif airbag dans véhicules

(30) Priorität: 03.11.1997 DE 19748499
(43) Veröffentlichungstag der Anmeldung: 06.05.1999
(73) Patentinhaber: TAKATA-PETRI (Ulm) GmbH, 89081 Ulm (DE)
(72) Erfinder: Heudorfer, Benedikt, 89278 Nersingen (DE); Bär, Stefan, 89075 Ulm (DE)
(74) Vertreter: Maikowski, Michael, Dipl.-Ing. Dr.

(56) Entgegenhaltungen:
- EP-A- 0 825 072
- EP-A- 0 839 691
- DE-A- 4 440 845
- US-A- 4 173 356

## Beschreibung

Die Erfindung betrifft ein Verfahren und eine Vorrichtung zum kompakten Zusammenfalten eines Gassackes einer Airbag-Vorrichtung bei Fahrzeugen, insbesondere Kraftfahrzeugen nach den Oberbegriffen der Patentansprüche 1 bzw. 4. Ein derartiges Verfahren und eine derartige Vorrichtung sind aus der DE 4 440 845 A bekannt.

Bei diesem bekannten Verfahren zum Falten eines Gassackes einer Airbag-Vorrichtung (DE 44 40 845 A1) ist vorgesehen, daß die Faltung des flachen Gassackes im wesentlichen durch eine Relativverdrehung zwischen mindestens zwei Wandungsabschnitten erfolgt. Hierzu wird der abgeflachte und ausgebreitete Gassack radial außen von Spannvorrichtungen erfaßt, worauf die Spannbaugruppe relativ zu der zentralen Haltevorrichtung verdreht wird. Durch diese Drehbewegung verringert sich der Außendurchmesser des Gassackes, weshalb die den Gassack haltenden Spannvorrichtungen radial nach innen nachgeführt werden müssen. Durch die Überlagerung der Drehbewegung der Spannstellen relativ zur zentralen Einlaßöffnung mit der Translationsbewegung radial nach innen bewegen sich die Spannstellen des Gassackes und somit auch die Spannvorrichtungen auf einer spiralförmigen Bahn auf die Einlaßöffnung zu. Dabei wird die Wandung des Gassackes in einer wickelartigen Bewegung um die Einlaßöffnung herum angeordnet. Im vollständig eingedrehten Zustand des Gassackes ist seine gesamte Wandung allgemein wulstförmig um die Einlaßöffnung herum angeordnet, wobei die Spannstellen an der Außenfläche des gefalteten Gassackes zu liegen kommen. Die Drehbewegung wird so lange weitergeführt, bis die gewünschte Packungsdichte der Faltung erreicht ist.

Ein Nachteil dieses bekannten Verfahrens besteht darin, daß die beim Eindrehen erfolgende Faltung der beiden Blätter des Gassackes relativ unkontrolliert vor sich geht, so daß die Form des schließlich erhaltenden kompakten Gassackpaketes nicht genau reproduzierbar ist.

Das Ziel der Erfindung besteht darin, ein Verfahren und eine Vorrichtung der eingangs genannten Gattung zu schaffen, mit denen auf einfache Weise eine weitgehend vorbestimmte Faltung des Gassackes beim Eindrehen erzielt wird, so daß das schließlich gebildete kompakte Gassackpaket stets zumindest im wesentlichen die gleiche Form annimmt.

Zur Lösung dieser Aufgabe sind die Merkmale der kennzeichnenden Teile der Patentansprüche 1 und 4 vorgesehen. Bevorzugt wird das erfindungsgemäße Verfahren bis zur Anordnung des kompakten Gassackpaketes in einem aufbrechbaren Behälter und dessen Anordnung in einem Kraftfahrzeug gemäß Anspruch 2 fortgeführt.

Aufgrund der erfindungsgemäßen Maßnahmen erhält der flach ausgebreitete Gassack schon vor dem Eindrehen in Umfangsrichtung gesehen eine wellenartige bzw. zick-zack-artige Ausbildung, die durch die Axialverschiebemittel erzwungen wird. Die Tiefe der Wellentäler bzw. die Höhe der Wellenerhöhungen sind dabei so zu wählen, daß beim Drehen der Axialverschiebemittel diese in Umfangsrichtung nicht entlang des festgehaltenen Gassackes gleiten, sondern diesen radial außerhalb des zentralen Festhaltebereiches in Umfangsrichtung zumindest im wesentlichen mitnehmen. Hierbei wird aufgrund der Wellen- bzw. Zick-Zack-Form eine wohldefinierte Radialfaltung des Gassackes erzielt, so daß beim Eindrehen der Falten nicht nur eine eindeutige Form des kompakten Gassackpaketes reproduziert wird, sondern das Gassackpaket auch besonders kompakt ausgebildet ist.

Vorteilhafte Weiterbildungen sind'durch die Unteransprüche gekennzeichnet.

Besonders vorteilhaft sind die Weiterbildungen nach Anspruch 5 weil durch die Radialstege und Drehscheiben die Wellen- bzw. Zick-Zack-Form des Gassackes besonders exakt vorgegeben wird.

Vorteilhafte praktische Ausführungen der erfindungsgemäßen Vorrichtung sind durch Anspruch 6 gekennzeichnet.

Das Einbringen eines flach ausgebreiteten Gassackes in die Vorrichtung wird durch die Ausführungsform nach Anspruch 7 erleichtert. Die exakte Formgebung für den Gassack wird durch die Maßnahmen des Anspruches 7 ebenfalls begünstigt.

Die Ausführungsform nach Anspruch 8 berücksichtigt die Tatsache, daß beim Eindrehen die radial innen auf den Gassack ausgeübten Axialkräfte unter Umständen bis an die Reißgrenze des Gewebematerials gehende Werte erreichen können, was durch die erfindungsgemäßen Weiterbildungen nach den vorgenannten Ansprüchen vermieden wird.

Der Abstand der Drehscheiben ist nicht nur zum Einbringen eines Gassackes bzw. zum Entnehmen eines kompakten Gassackpaketes veränderbar, sondern auch nach Anspruch 9 zu dem Zweck, wahlweise unterschiedliche Faltengrößen zu erzielen. Die Änderung des Arbeitsabstandes der Drehscheiben kann zweckmäßig durch die Merkmale des Anspruchs 9 verwirklicht werden.

Eine vorteilhafte praktische Ausführungsform der Erfindung entnimmt man Anspruch 10 Nach Anspruch 11 soll das Zentrum des Gassackes zumindest im Betriebszustand an den Wellen befestigt sein.

Nach Anspruch 11 sind die beiden Drehscheiben vorteilhafterweise synchron zu einer Drehbewegung antreibbar.

Besonders bevorzugt ist es, wenn der Gassack nach einem ersten Eindrehen in einer Drehrichtung anschließend unter Festhalten des bereits eingedrehten Teils durch Peripherhaltemittel in der entgegengesetzten Richtung eingedreht wird.

Bevorzugt wird die Drehrichtung beim Eindrehen des Gassackes ein- bis dreimal geändert.

Besonders vorteilhafte Weiterbildungen des erfindungsgemäßen Verfahrens entnimmt man den Ansprüche 12 bis 16.

Die Erfindung wird im folgenden beispielsweise anhand der Zeichnung beschrieben; in dieser zeigt:
- Figur 1: eine perspektivische Schrägdraufsicht der unteren Drehscheibe einer erfindungsgemäßen Vorrichtung zum kompakten Zusammenfalten eines Gassackes einer Airbag-Vorrichtung,
- Figur 2: eine entsprechende perspektivische Ansicht bei auf die untere Drehscheibe aufgelegtem flach ausgebreitetem Gassack,
- Figur 3: eine entsprechende perspektivische Ansicht bei auf die untere Drehscheibe aufgesetzter oberer Drehscheibe im Betriebszustand, d.h. in Bereitschaft zum Eindrehen eines zwischen den beiden Drehscheiben angeordneten Gassackes,
- Figur 4: eine vergrößerte Radialansicht von außen im Bereich eines Radialsteges der unteren Drehscheibe zur Veranschaulichung der Verformung des zwischen den beiden Drehscheiben angeordneten Gassackes,
- Figur 5: einen schematischen zentralen Vertikalschnitt durch eine erfindungsgemäße Vorrichtung mit eingelegtem flachen Gassack,
- Figur 6: eine schematische Schnittansicht des Gegenstandes der Figur 5 nach Linie VI-VI in Figur 5,
- Figur 7: eine vergrößerte perspektivische Schrägdraufsicht auf die untere Drehscheibe einer erfindungsgemäßen Vorrichtung mit dem im radial inneren Aufnahmeraum angeordneten, vollständig eingedrehten kompakten Gassackpaket, wobei der Anschaulichkeit halber die obere Drehscheibe abgenommen ist,
- Figur 8: eine vergrößerte Schnittansicht analog Figur 5, wobei jedoch nur der radial innere Bereich der erfindungsgemäßen Vorrichtung wiedergegeben ist und der Gassack in seiner eingeklemmten Position wiedergegeben wird und zusätzlich erfindungsgemäße Peripherhaltemittel in drei verschiedenen Arbeitspositionen dargestellt sind, und die
- Figuren 9 bis 13: schematische Draufsichten der vorteilhaften Weiterbildung der Erfindung gemäß Figur 8 in verschiedenen Stadien des Eindrehvorganges wiedergeben.

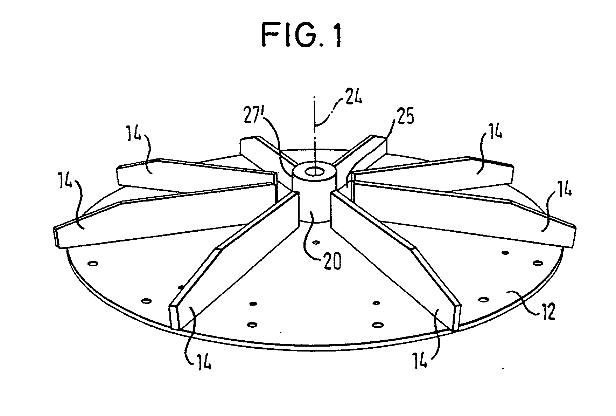

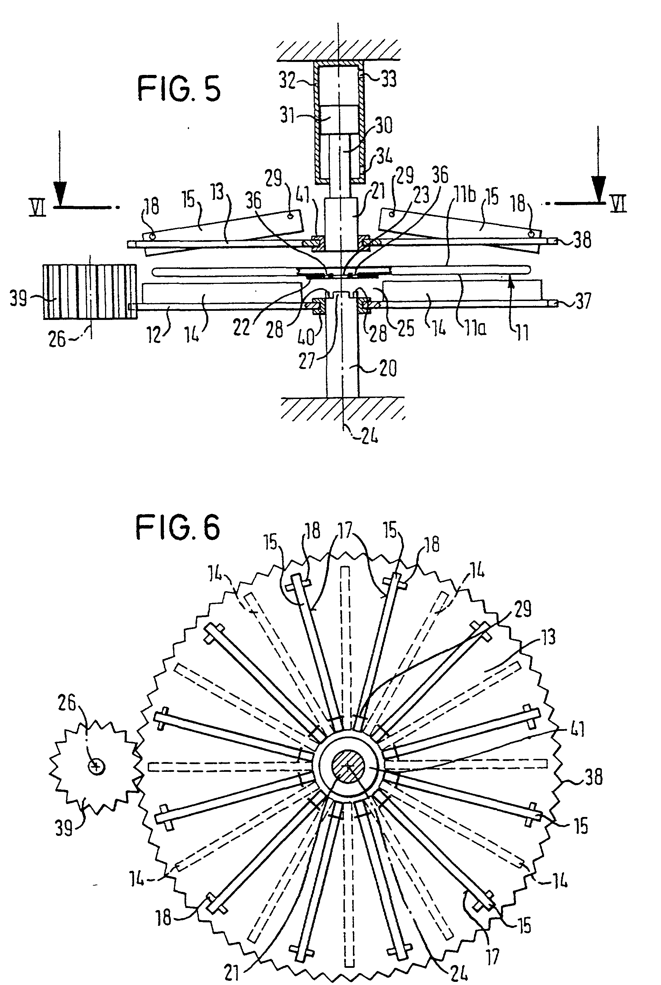

Nach den Figuren 1 und 5 sind auf einer unteren Drehscheibe 12 in gleichmäßigen Umfangsabständen insgesamt acht bzw. zwölf (Figur 6) vertikal stehende Radialstege 14 befestigt, welche eine parallel zur Drehscheibe 12 verlaufende Oberkante aufweisen, die bei der Ausführungsform nach Figur 1 radial außen etwas nach unten abgeschrägt ist. Zur Mitte hin enden die Radialstege 14 in einem solchen Abstand von der zentralen vertikalen Drehachse 24 der Drehscheibe 12, daß rund um die Mittelachse 24 bis zu den radial inneren Endkanten der Radialstege 14 ein zentraler Aufnahmeraum 25 gebildet wird.

Nach Figur 5 ist die untere Drehscheibe 12 am oberen Ende einer drehfest und vorzugsweise auch axial fest sowie vertikal angeordneten Welle 20 mittels eines Drehlagers 40 um die Mittelachse 24 drehgelagert.

Oben weist die Welle 20 einen zentralen Klemmzapfen 27 und radial etwas weiter außen vertikale Drehsicherungsstifte 28 auf, die sich ebenfalls nach oben von der Welle 20 weg erstrecken.

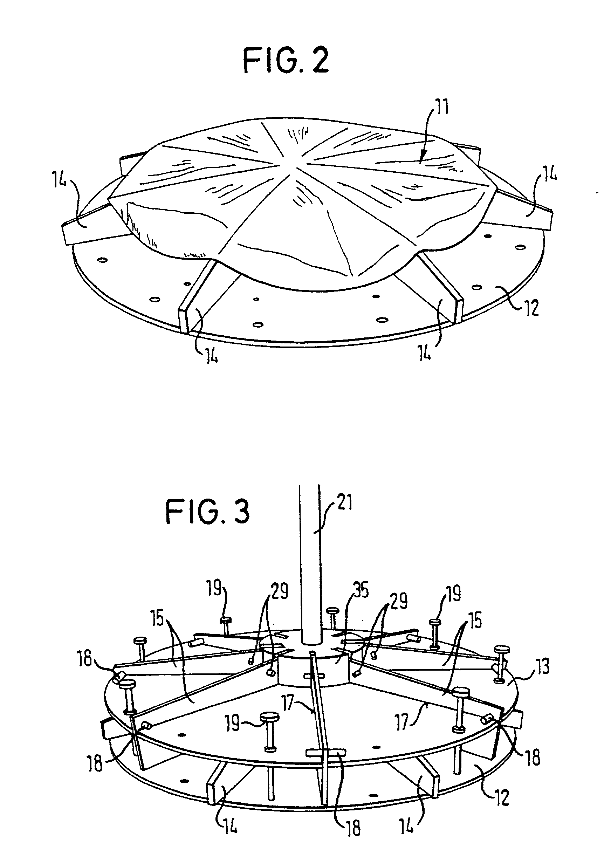

Beim Ausführungsbeispiel nach Figur 1 besitzt die Welle 20 oben einen Kopf 27', der sowohl der Klemmung als auch der Drehsicherung des Gassackes 11 (Figur 2, 5) in der später zu beschreibenden Weise dient.

Oberhalb der Drehscheibe 12 ist nach den Figuren 3 und 5 im vertikalen Abstand von der ersten Drehscheibe 12 eine zweite Drehscheibe 13 vorgesehen, welche über den Umfang gleichmäßig verteilt acht bzw. zwölf (Figur 6) radiale durchgehende Schlitze 17 aufweist, in denen vertikal stehende Radialstege 15 verschiebbar untergebracht sind. Die Radialstege 15 sind radial außen um periphere Achsen 18 an der oberen Drehscheibe 15 drehbar gelagert und weisen radial innen und oben periphere Sicherungsstifte 29 auf, die gewährleisten, daß die durch Schwerkraft nach unten geschwenkten Radialstege 15 nur so weit um die Achsen 18 nach unten schwenken, daß sie eine im wesentlichen horizontale Position einnehmen, in der sie von der oberen Drehscheibe 13 etwa genauso weit nach unten vorstehen, wie die Radialstege 14 von der unteren Drehscheibe 12 nach oben. Um die Schwenkbarkeit der oberen Radialstege 15 zu veranschaulichen, sind diese in Figur 3 und 5 in ihrer nach oben geschwenkten Position wiedergegeben.

Nach Figur 5 ist die obere Drehscheibe 13 in Drehlagern 41 an einer von ihr nach oben vorstehenden drehfesten Welle 21 drehgelagert. Die Welle 21 ist über eine Kolbenstange 30 mit einem Kolben 31 vertikal geführt verbunden, welcher in einem vertikal stehenden hydraulischen Zylinder 32 verschiebbar ist, indem ein hydraulisches Druckmittel entweder durch eine obere Einlaßöffnung 33 oder eine untere Einlaßöffnung 34 zugeführt wird. Durch Zufuhr von Druckmittel in die obere Öffnung 33 und Abfuhr aus der unteren Öffnung 34 kann der Kolben 31 und damit die Welle 21 mit der oberen Drehscheibe 13 und den Radialstegen 15 nach unten in Richtung der koaxial zu ihr angeordneten unteren Drehscheibe 12 verschoben werden. Durch Zufuhr von hydraulischem Druckmittel durch die untere Öffnung 34 und Abfuhr durch die obere Öffnung 33 kann die Welle 21 mit der oberen Drehscheibe 13 angehoben werden. Die untere Drehscheibe 12 ist bevorzugt vertikal feststehend.

Beim Ausführungsbeispiel nach Figur 3 weist die obere Drehscheibe 13 eine zentrale Nabe 35 auf, welche die Drehlagerung an der Welle 21 übernimmt.

Während beim Ausführungsbeispiel nach Figur 5 die Drehscheiben 12, 13 drehbar, jedoch axial unverschiebbar an den Wellen 20, 21 gelagert sind, ist es auch möglich, zumindest die obere Drehscheibe 13 auch axial verschiebbar an der nicht drehbaren oberen Welle 21 zu lagern, derart, daß die vertikale Beweglichkeit der oberen Drehscheibe 13 durch Vertikalverschiebung auf der in diesem Fall vertikal feststehenden oberen Welle 21 erfolgt. Auch in diesem Fall sollen jedoch die Wellen 20, 21 aufeinander zu bewegbar sein, um den Gassack 11 klemmen zu können.

Nach Figur 3 sind am Umfang in vertikale Gewindebohrungen der oberen Drehscheibe 13 Schrauben 19 eingedreht, welche bis zur unteren Drehscheibe 12 reichen und sich an dieser abstützen. Durch mehr oder weniger tiefes Eindrehen der Schrauben 19 in die Gewindebohrungen der oberen Drehscheibe 13 kann so ein vorbestimmter Arbeitsabstand zwischen den Drehscheiben 12, 13 eingestellt werden. Der Übersichtlichkeit halber sind die einen vorbestimmten Arbeitsabstand der Drehscheiben 12, 13 gewährleistenden Schrauben 19 in Fig. 5, 6 nicht dargestellt.

Nach Figur 5 ist zwischen die maximal voneinander entfernten Drehscheiben 12, 13 ein aus zwei kreisförmigen Zuschnitten bestehender flach ausgelegter Gassack 11 angeordnet, der auf der Unterseite in der Mitte eine rund um eine zentrale Öffnung 23 vorgesehene Rundumverstärkung 22 trägt. An dieser Stelle wird der Gassack 11 später an einen Gasgenerator angeschlossen.

Erfindungsgemäß ist der zentrale Klemmzapfen 27 der Welle 20 so dimensioniert, daß er in die zentrale Öffnung 23 der Rundumverstärkung 22 paßt. Um eine drehfeste Verbindung zwischen der Rundumverstärkung 22 und der Welle 20 zu gewährleisten, sind an der Rundumverstärkung 22 außerdem Vertikalbohrungen 36 in die beim Absenken des Gassackes 11 aus der Position nach Figur 5 die Drehsicherungsstifte 28 am oberen Ende der Welle 20 eingreifen können.

Nach den Figuren 5 und 6 können die Drehscheiben 12, 13 an ihrem Umfang mit Zahnkränzen 37 bzw. 38 versehen sein, in welche ein zu einer Drehbewegung antreibbares Ritzel 39 mit vertikaler Achse 26 eingreift. Der Eingriff zwischen der oberen Drehscheibe 13 in das Ritzel 39 erfolgt erst, wenn die obere Drehscheibe 13 aus der obersten Position nach Figur 5 in die untere Arbeitslage (Figur 3) überführt worden ist.

Die Arbeitsweise der beschriebenen Vorrichtung wird im folgenden auch unter Bezugnahme auf die Figuren 2, 4 und 7 im einzelnen erläutert:

Bei gemäß Figur 5 maximal voneinander entfernten Drehscheiben 12, 13 wird zunächst der flach ausgebreitete Gassack 11 so wie in Figur 2 gezeigt, auf die untere Drehscheibe 12 aufgelegt.

Hierbei wird die in Figur 5 gezeigte zentrale Öffnung 23 der in Figur 2 nicht sichtbaren unteren Rundumverstärkung 22 des Gassackes 11 auf den Klemmzapfen 27 aufgeschoben, während gleichzeitig die Drehsicherungsstifte 28 von unten in die Vertikalbohrungen 36 der Rundumverstärkung 22 eingreifen, um die untere Lage des Gassackes 11 drehfest mit der feststehenden Welle 20 zu verbinden. Der Anschaulichkeit halber ist die obere Drehscheibe 13 in der Darstellung der Figur 2 fortgelassen worden.

Nunmehr wird bei gemäß Figur 3 um eine halbe Teilung in Umfangsrichtung versetzten Drehscheiben 11 die Welle 21 mit der oberen Drehscheibe 13 durch Absenken des Kolbens 31 (Fig. 5) nach unten verschoben, bis die Schrauben 19 gemäß Figur 3 auf der unteren Drehscheibe 12 zu liegen kommen. Im gleichen Augenblick legt sich die untere Stirnseite der oberen Welle 21 unter Zwischenschaltung der oberen Lage des Gassackes 11 an den Klemmzapfen 27 an. Hierdurch wird auch die obere Lage des Gassackes 11 durch Klemmung zwischen den beiden Wellen 20, 21 festgelegt.

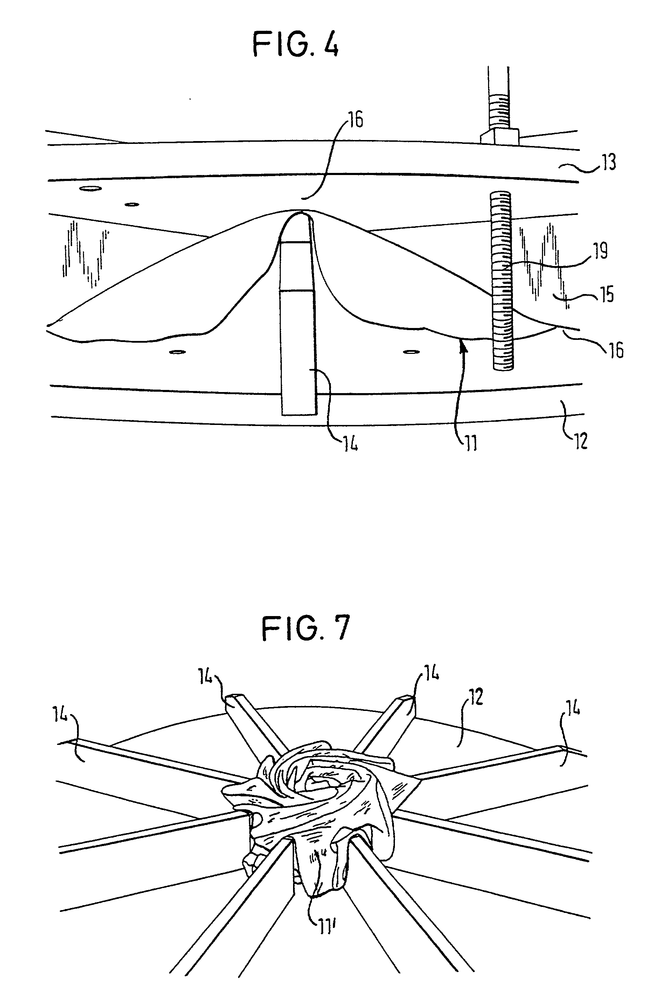

In der abgesenkten Position der Drehscheibe 13 überlappen sich die Radialstege 14, 15 in vertikaler Richtung, wie das aus den Figuren 3 und 4 ersichtlich ist.

Die Überlappung geht jedoch nur so weit, daß zwischen der Oberkante der unteren Radialstege 14 und der Drehscheibe 13 bzw. zwischen der Unterkante der oberen Radialstege 15 und der Drehscheibe 12 gemäß Figur 4 jeweils ein Spalt 16 verbleibt, innerhalb dessen sich das Material des Gassackes 11 ohne Klemmung befindet, so daß es insbesondere in radialer Richtung in dem Spalt 16 verrutschen kann.

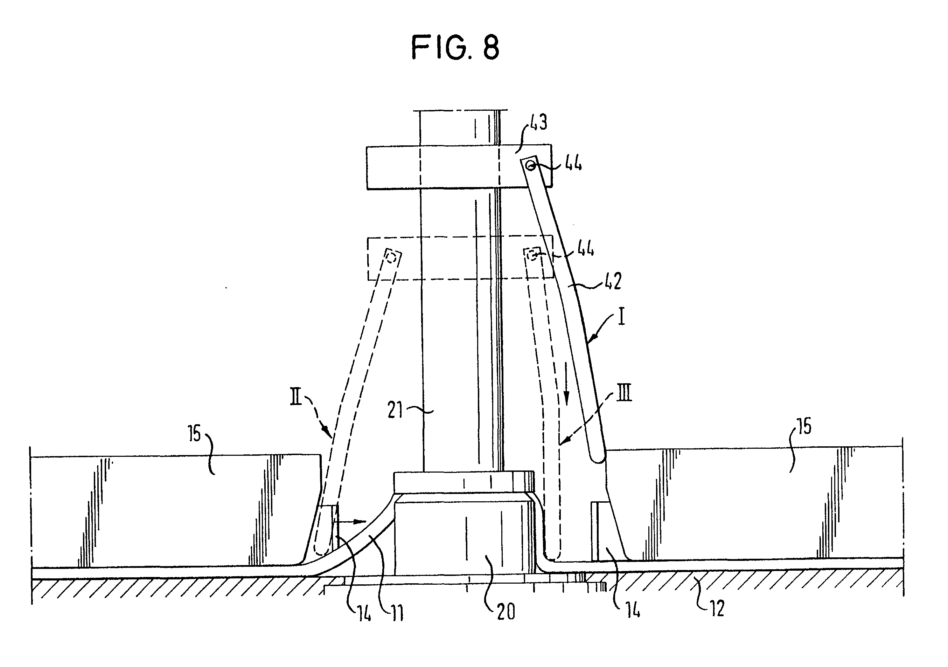

Nunmehr werden die beiden Drehscheiben 12, 13 mittels des Zahnrades 39 (Fig. 5, 6) in einer Richtung synchron verdreht, wobei wegen des festgehaltenen Innenbereiches des Gassackes 11 die radial weiter außen liegenden Bereiche um den zentralen Bereich herum eingedreht werden. Die axiale Erstreckung der Radialstege 14, 15 muß derart sein, daß bei einer Drehung der Drehscheiben 12, 13 und der damit verbundenen Radialstege 14, 15 die radial außerhalb des zentralen Klemmbereiches liegenden Bereiche des Gassackes 14 die synchrone Drehbewegung zumindest im wesentlichen mitmachen. Hierbei werden durch die Radialstege 14, 15 definiert radiale Falten ausgebildet, die kompakt um den Zentralbereich herumgewickelt werden, so daß schließlich im Aufnahmeraum 25 ein kompaktes Gassackpaket 11' gebildet wird, wie es aus Figur 7 zu ersehen ist, wo der Anschaulichkeit halber ebenfalls die obere Drehscheibe 13 weggelassen ist.

Um übermäßige Axialkräfte auf das Gassackmaterial während des Eindrehens zu vermeiden, sind die oberen Radialstege 15 in der oben beschriebenen Weise axial ausweichbar gelagert, so daß die Radialstege 15 durch das in der Eindrehung befindliche Material nach oben weggedrückt werden können, wodurch ein Einreißen des Gassackmaterials wirksam vermieden wird, ohne die definierte Faltenbildung zu beeinträchtigen.

Nach Fertigstellung des kompakten Gassackpaketes 11' gemäß Figur 7 wird dieser im aufbrechbaren Behälter untergebracht, worauf dann die Anbringung des Befestigungsbleches und des Gasgenerators erfolgt. Nunmehr kann die fertiggestellte Airbag-Anordnung in einem Kraftfahrzeug an geeigneter Stelle montiert werden.

Das Grundkonzept der erfindungsgemäßen Vorrichtung besteht also darin, den Gassack zwischen den beiden Drehscheiben 12, 13 anzuordnen und in der Mitte zu fixieren. Der Gassack bildet dabei eine Art Zick-Zack-Muster zwischen den beiden Drehscheiben. Der Durchmesser der beiden Scheiben richtet sich nach der Größe der zu faltenden Gassäcke. Als Material für die Drehscheiben und Radialstege sollte ein hochfester Werkstoff verwendet werden.

Die Radialstege 14, 15 können eine Höhe von etwa 1 cm und eine Rundung mit R5 aufweisen, damit der Gassack 11 einerseits nicht verletzt, andererseits aber bei der Drehbewegung auch mitgenommen wird. Die axiale Höhe der Radialstege 14, 15 soll mehrere cm betragen.

Die oberen Radialstege 15 sind prinzipiell gleich wie die unteren Radialstege 14 gestaltet, sollten jedoch eine etwas größere Höhe besitzen, um im oberen Bereich zwei Bohrungen vorsehen zu können, von denen eine zur Aufnahme der peripheren Achse 18, die andere für die Anordnung der Sicherungsstifte 29 vorgesehen ist.

Nach Figur 8 ist an der oberen Welle 21 ein vertikal verschiebbarer, jedoch drehfester Verschiebebock 43 vorgesehen, an welchem über den Umfang verteilt im Bereich jedes oberen Radialsteges 15 ein Fixierungsstift 42 über ein peripher gerichtetes Gelenk 44 so angebracht ist, daß jeder Fixierungsstift 42 sowohl axial als auch radial nach innen bewegbar ist. Jeder Fixierungsstift 42 erstreckt sich vom Verschiebebock 43 im wesentlichen nach unten bis etwas oberhalb des eingeklemmten Gassackes 11.

In Figur 8 ist der Fixierungsstift 42 einmal in seiner oberen unwirksamen Position I, ein zweites Mal - gestrichelt - in der zum eingedrehten Gassackteil hin axial nach unten verschobenen Stellung II und schließlich ein drittes Mal - gestrichelt - in der axial nach unten verschobenen sowie radial nach innen eingeschwenkten Stellung III wiedergegeben, in welcher der bereits eingedrehte Gassackteil in Umfangsrichtung so fixiert wird, daß anschließend ein Eindrehen in der entgegengesetzten Drehrichtung möglich ist.

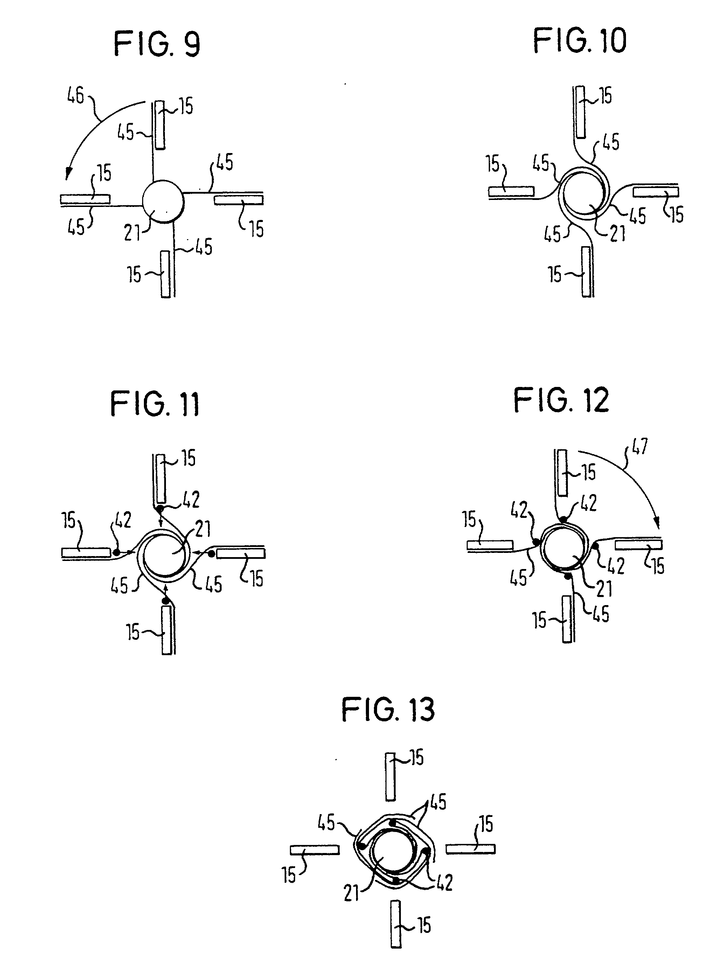

Figur 9 zeigt in schematischer Draufsicht eine erfindungsgemäße Vorrichtung mit vier um jeweils 90° in Umfangsrichtung versetzten Radialstegen 15 am Beginn des in Richtung des Pfeiles 46 erfolgenden Eindrehvorganges, wobei die sich bildenden Gassackfalten bei 45 angedeutet sind.

Figur 10 veranschaulicht, wie sich der gefaltete Gassack mit den Falten 45 um die zentrale Klemmstelle unterhalb der Welle 21 herumwickelt.

Sobald nach Figur 11 ein bestimmter Aufwickelungsgrad von z.B. 50 % erzielt ist, wird die Drehbewegung der Drehscheiben 12, 13 angehalten, und die Fixierungsstifte 42 werden axial nach unten in die Position II nach Figur 8 verschoben. Danach werden die in Umfangsrichtung festen Fixierungsstifte 42 um das Gelenk 44 radial nach innen aus der Position II in die Position III nach Figur 8 verschwenkt, bis sie schließlich die in Figur 12 dargestellte Lage erreichen. Hierdurch wird ein Aufdrehen des bereits eingedrehten Gassackteils wirksam vermieden.

Nunmehr erfolgt eine Drehung der Drehscheiben 12, 13 in der entgegengesetzten Richtung gemäß Pfeil 47 in Figur 12 bis schließlich auch die radialen Außenbereiche des Gassackes mit den an ihnen gebildeten Falten 45 vollständig eingedreht sind. Diese Endposition ist in Figur 13 wiedergegeben.

Sollte bei Erreichen der Position nach Figur 13 der Gassack 11 noch nicht vollständig eingedreht sein, so könnten die Fixierstifte 44 durch Nach-Oben-Fahren des Verschiebebocks nach Figur 8 vom bereits fertiggestellten Teil des eingedrehten Gassackes axial abgezogen und radial weiter außen erneut mit dem Gassack 11 in Eingriff gebracht werden, worauf dann ein Eindrehen des restlichen Teil des Gassackes wieder in der entgegengesetzter Richtung in analoger Weise vorgenommen werden könnte.

Die radial äußerste Position der Fixierungsstifte 42 kann durch geeignete Vorspannmittel, z.B. Federn, und ggf. Anschläge erreicht und gehalten werden.

### Bezugszeichenliste

- 11: Gassack
- 11': kompaktes Gassackpaket
- 12: untere Drehscheibe
- 13: obere Drehscheibe
- 14: untere Radialstege
- 15: obere Radialstege
- 16: Spalt
- 17: Schlitz
- 18: periphere Achse
- 19: Schraube
- 20: Welle
- 21: Welle
- 22: Rundumverstärkung
- 23: Öffnung
- 24: Mittelachse
- 25: Aufnahmeraum
- 26: Achse
- 27: Klemmzapfen
- 27': Kopf
- 28: Drehsicherungsstift
- 29: Sicherungsstift
- 30: Kolbenstange
- 31: Kolben
- 32: hydraulischer Zylinder
- 33: Öffnung
- 34: Öffnung
- 35: Nabe
- 36: Vertikalbohrung
- 37: Zahnkranz
- 38: Zahnkranz
- 39: Ritzel
- 40: Drehlager
- 41: Drehlager
- 42: Fixierstift (Peripherhaltemittel)
- 43: Verschiebebock
- 44: Gelenk
- 45: Luftsackfalte
- 46: Pfeil
- 47: Pfeil

## Patentansprüche

1. Verfahren zum kompakten Zusammenfalten eines Gassackes (11) einer Airbag-Vorrichtung bei Fahrzeugen, bei welchen ein flach angeordneter Gassack (11), der aus zwei aufeinanderliegenden, an ihrem Umfang miteinander verbundenen flexiblen Blättern (11a, 11b) besteht, von denen eines (11a) eine bevorzugt mit einer Rundumverstärkung (22) versehene zentrale Öffnung (23) zum Anschluß eines Gasgenerators aufweist, flach, insbesondere eben ausgelegt, in der Mitte festgehalten und mit den radial außerhalb der Mitte liegenden Bereichen um eine zumindest im wesentlichen senkrecht zum flachgelegten Gassack (11) durch den zentralen Festhaltebereich verlaufende Achse (24) in zumindest einer Drehrichtung eingedreht wird, bis ein kompaktes Gassackpaket (11') gebildet ist,
**dadurch gekennzeichnet,**
**daß** das flexible Material des flachgelegten Gassackes (11) vor dem Eindrehen durch rund um die Achse (24) verteilte, radiale, radial innen einen Aufnahmeraum (25) belassende Axialverschiebemittel (14, 15) in Umfangsrichtung gesehen abwechselnd in der einen und anderen Axialrichtung derart verschoben wird, daß der Gassack (11) in Umfangsrichtung gesehen einen wellenartigen bzw. zick-zack-artigen Verlauf nimmt, wobei Wellenform und Wellenlänge so gewählt sind, daß beim synchronen Drehen der Axialverschiebemittel (14, 15) um die Achse (24) die radial außerhalb des zentralen Festklemmbereiches liegenden Bereiche des wellenartig bzw. zick-zack-artig gefalteten Gassackes (11) von den Axialverschiebemitteln (14, 15) in Umfangsrichtung zumindest im wesentlichen mitgenommen werden, und daß anschließend das Eindrehen so lange erfolgt, bis unter Bildung abwechselnd in entgegengesetzte Axialrichtungen weisender radialer Falten im radial innerhalb der Axialverschiebemittel (14, 15) befindlichen Aufnahmeraums (25) das kompakte Gassackpaket (11') gebildet ist.

2. Verfahren nach Anspruch 1,
**dadurch gekennzeichnet,**
**daß** das Eindrehen nur in einer Drehrichtung erfolgt oder daß das Eindrehen abwechselnd in der einen und der anderen Drehrichtung erfolgt, wobei vorzugsweise vor Umkehr der Drehrichtung der bereits eingedrehte Teil des Gassackes (11) gegen Aufdrehen gehalten bzw. gesichert wird.

3. Verfahren nach einem der vorhergehenden Ansprüche,
**dadurch gekennzeichnet,**
**daß** das kompakte Gassackpaket (11') an einen Gasgenerator angeschlossen, in einem aufbrechbaren Behälter untergebracht und in dieser Form in einem in der Nähe von Personenaufenthaltsstellen im Fahrzeug angebracht wird.

4. Vorrichtung zum kompakten Zusammenfalten eines Gassackes (11) einer Airbag-Vorrichtung bei Fahrzeugen, in welcher ein flach angeordneter Gassack (11), der aus zwei aufeinanderliegenden, an ihrem Umfang miteinander verbundenen, flexiblen Blättern (11a, 11b) besteht, von denen eines eine bevorzugt mit einer Rundumverstärkung (22) versehene zentrale Öffnung (23) zum Anschluß eines Gasgenerators aufweist, flach, insbesondere, eben ausgelegt ist, durch Klemm-Mittel (20, 21, 27) in der Mitte festgehalten und durch radial außerhalb des Festhaltebereiches liegende Erfassungsmittel (14, 15) mit den radial außerhalb der Mitte liegenden Bereichen um eine zumindest im wesentlichen senkrecht zum flachgelegten Gassack (11) durch den zentralen Festhaltebereich verlaufende Achse (24) in zumindest einer Richtung eindrehbar ist, bis ein kompaktes Gassackpaket (11') gebildet ist,
**dadurch gekennzeichnet,**
**daß** als Erfassungsmittel rund um die Achse (24) verteilte, radiale, radial innen einen Aufnahmeraum (25) belassende Axialverschiebemittel (14, 15) vorgesehen sind, welche das flexible Material des flachgelegten Gassackes (11) vor dem Eindrehen in Umfangsrichtung gesehen abwechselnd in der einen und anderen Axialrichtung derart verschieben, daß der Gassack (11) in Umfangsrichtung gesehen einen wellenartigen bzw. zick-zack-artigen Verlauf nimmt, wobei Wellenform und Wellenlänge so gewählt sind, daß beim synchronen Drehen der Axialverschiebemittel (14, 15) um die Achse (24) die radial außerhalb des zentralen Festklemmbereiches liegenden Bereiche des wellenartig bzw. zick-zack-artig gefalteten Gassackes (11) von den Axialverschiebemitteln (14, 15) in Umfangsrichtung zumindest im wesentlichen mitgenommen werden, und daß Drehantriebsmittel (12, 13, 38, 39) für die Axialverschiebemittel (14, 15) vorgesehen sind, welche die radial außerhalb des zentralen Festhaltebereichs liegenden Bereiche des Gassackes (11) so lange eindrehen, bis unter Bildung abwechselnd in entgegengesetzte Axialrichtungen weisender, radialer Falten im radial innerhalb der Axialverschiebemittel (14, 15) befindlichen Aufnahmeraum (25) das kompakte Gassackpaket (11') gebildet ist.

5. Vorrichtung nach Anspruch 4,
**dadurch gekennzeichnet,**
**daß** die radialen Axialverschiebemittel aus aufeinander zu weisenden, peripher gegeneinander versetzten, axial einander überlappenden Radialstegen (14, 15) bestehen, zwischen denen der flach ausgebreitete Gassack (11) derart angeordnet werden kann, daß der zentrale Bereich des Gassackes (11) festgehalten und die radial außerhalb des zentralen Bereiches liegenden Außenbereiche in peripherer Richtung wellen- bzw. zick-zack-artig lose zwischen den Radialstegen (14, 15) zu liegen kommen, wobei vorzugsweise die Radialstege (14, 15) an zwei einander mit Abstand axial gegenüberliegenden, vorzugsweise koaxial angeordneten Drehscheiben (12, 13) angeordnet sind.

6. Vorrichtung nach einem der Ansprüche 4 oder 5,
**dadurch gekennzeichnet,**
**daß** über den Umfang verteilt vier bis zwölf, insbesondere sechs bis zehn und bevorzugt acht radiale Axialverschiebemittel (14, 15) vorgesehen sind und/oder
**daß** die radialen Axialverschiebemittel (14, 15) in Umfangsrichtung gesehen um im wesentlichen eine halbe Teilung versetzt sind und/oder
**daß** der Außendurchmesser der kreisförmigen Anordnung von Axialverschiebemitteln (14, 15) bzw. der Durchmesser der Drehscheiben (12, 13) 60 bis 100, insbesondere etwa 80 cm beträgt und/oder die axiale Höhe der Axialverschiebemittel (14, 15) 4 bis 8, insbesondere etwa 6 cm beträgt.

7. Vorrichtung nach einem der Ansprüche 4 bis 6,
**dadurch gekennzeichnet,**
**daß** die Axialverschiebemittel (14, 15) gegebenenfalls einschließlich der Drehscheiben (12, 13) zum Einbringen eines flachgelegten Gassackes (11) axial voneinander weg - bzw. aufeinander zu bewegbar sind und/oder
**daß** die Drehscheiben (12, 13) im Arbeitszustand einen solchen axialen Abstand voneinander haben, daß zwischen den Axialverschiebemitteln (14, 15) und der Oberfläche der gegenüberliegenden Drehscheibe (12, 13) nur ein schmaler Spalt (16) verbleibt, der gerade ausreicht, daß der flache Gassack (11) ohne Klemmung und mit etwas Spiel hindurchpaßt.

8. Vorrichtung nach einem der Ansprüche 4 bis 7,
**dadurch gekennzeichnet,**
**daß** die Axialverschiebemittel (14, 15) wenigstens einer Gruppe, insbesondere einer Drehscheibe (12, 13) und vorzugsweise nur einer Gruppe, insbesondere Drehscheibe (12, 13) in axialer Richtung gegen eine Vorspannkraft von der gegenüberliegenden Gruppe, insbesondere Drehscheibe (13, 12) entfernbar gelagert ist, derart, daß die beweglich gelagerten Axialverschiebemittel (14, 15) wenigstens radial innen axial ausweichen können, wenn die auf den Gassack (11) ausgeübten Axialkräfte beim Eindrehen einen vorbestimmten Wert überschreiten und/oder
**daß** die beweglich gelagerten Axialverschiebemittel (14, 15) radial außen um peripher gerichtete Achsen (45) drehbar insbesondere an der zugeordneten Drehscheibe (12, 13) gelagert sind und vorzugsweise in radiale Schlitze (17) in der zugeordneten Drehscheibe (12, 13) ragen, wobei vorzugsweise die Vorspannkraft eine Federkraft oder die Schwerkraft ist, indem die Gruppe der beweglich gelagerten Axialverschiebemittel (14, 15), insbesondere die Drehscheibe (12, 13) mit den beweglich gelagerten Axialverschiebemitteln (14, 15) über der anderen Gruppe, insbesondere der anderen Drehscheibe (13 bzw. 12) angeordnet ist.

9. Vorrichtung nach einem der Ansprüche 4 bis 8,
**dadurch gekennzeichnet,**
**daß** der Arbeitsabstand der Axialverschiebemittel (14, 15) bzw. der diese tragenden Drehscheiben (12, 13) veränderbar bzw. einstellbar ist, wobei sich bevorzugt zwischen den Drehscheiben (12, 13) vorzugsweise radial außen einstellbare Abstandshalter (19) erstrecken, die bevorzugt als abstandhaltende Schrauben (19) ausgebildet sind, wobei insbesondere die Abstandshalter (19) in der einen Drehscheibe (13) axial verstellbar angeordnet sind und sich an der anderen Drehscheibe (12) abstützen.

10. Vorrichtung nach einem der Ansprüche 5 bis 9,
**dadurch gekennzeichnet,**
**daß** die Drehscheiben (12, 13) radial innen an feststehenden Wellen (20, 21) dreh- und vorzugsweise auch axial verschiebbar gelagert sind, wobei vorzugsweise das Zentrum des Gassackes (11) zwischen den Stirnenden der Wellen (20, 21) festlegbar ist.

11. Vorrichtung nach einem der Ansprüche 4 bis 10, **dadurch gekennzeichnet,**
**daß** die Axialverschiebemittel (14, 15) gegebenenfalls zusammen mit den Drehscheiben (12, 13) synchron um eine zentrale Achse (24) drehbar sind, die sich senkrecht zum flach ausgebreiteten Gassack (11) erstreckt und / oder
**daß** Peripherhaltemittel (42) vorgesehen sind, die jeweils nach einer vorbestimmten Eindrehphase mit dem bereits eingedrehten Teil des Gassackes derart in Eingriff bringbar sind, daß anschließend ein weiteres Eindrehen in der entgegengesetzten Drehrichtung erfolgen kann, ohne daß der bereits eingedrehte Teil des Gassackes (11) wieder aufgedreht wird, wobei vorzugsweise jedem oberen Radialsteg (15) ein Peripherhaltemittel (42) zugeordnet ist und insbesondere die Axialhaltemittel aus Fixierungsstiften (42) bestehen können, die sich während des ersten Eindrehvorganges oberhalb des Gassackes (11) und außer Eingriff mit diesem befinden und zum peripheren Fixieren des eingedrehten Teils des Gassackes (11) axial in Eingriff mit dem eingedrehten Teil des Gassackes bewegbar sind, wobei vorzugsweise die Peripherhaltemittel (42) sowohl axial als auch radial von außen nach innen beweglich angeordnet sind.

12. Verfahren nach einem der Ansprüche 1 bis 3 zur Ausführung mit einer Vorrichtung nach einem der Ansprüche 4 bis 11, **dadurch gekennzeichnet,**
**daß** der flach ausgebreitete Gassack (11) zwischen zwei einander mit Abstand axial gegenüberliegenden, vorzugsweise koaxial zueinander angeordnete Drehscheiben (12, 13) mit aufeinander zu weisenden peripher gegeneinander versetzten, axial einander überlappenden Radialstegen (14, 15) eingebracht wird, daß der zentrale Bereich des Gassackes (11) festgehalten und die radial außerhalb des zentralen Bereiches liegenden Außenbereiche in peripherer Richtung wellen- bzw. zick-zack-artig lose zwischen den Drehscheiben (12, 13) und den Radialstegen (14, 15) angeordnet werden und daß anschließend die beiden Drehscheiben (12, 13) in zumindest einer Richtung synchron gedreht werden, bis im Aufnahmeraum (25) das kompakte Gassackpaket ( 11') gebildet ist.

13. Verfahren nach Anspruch 12,
**dadurch gekennzeichnet,**
**daß** die wellenförmigen Erhöhungen bzw. Vertiefungen des Gassakkes (11) über den Umfang gleichmäßig verteilt werden und/oder
**daß** die Erhöhungen und Vertiefungen des Gassackes (11) in Umfangsrichtung um im wesentlichen eine halbe Teilung versetzt angeordnet werden und/oder
**daß** der Durchmesser der Drehscheiben (12, 13) an den Durchmesser des flach ausgebreiteten Gassackes (11) angepaßt wird und daß vorzugsweise der Durchmesser des flach ausgebreiteten Gassackes (11) 60 bis 100 und insbesondere etwa 80 cm beträgt, wobei insbesondere die Erhöhungen und Vertiefungen des Gassackes (11) einen axialen Abstand von 4 bis 8 und insbesondere etwa 6 cm besitzen können.

14. Verfahren nach einem der Ansprüche 11 bis 13,
**dadurch gekennzeichnet,**
**daß** die Drehscheiben (12, 13) zum Einbringen eines Gassackes (11) axial voneinander weg und dann aufeinander zu bewegt werden und/oder
**daß** die Drehscheiben (12, 13) auf einen solchen Abstand eingestellt werden, daß zwischen den Axialverschiebemitteln (14, 15) und der Oberfläche der gegenüberliegenden Drehscheibe (13 bzw. 12) nur ein schmaler Spalt (16) verbleibt, der gerade ausreicht, daß der flache Gassack (11) ohne Klemmung und mit etwas Spiel hindurchpaßt und/oder
**daß** die Axialverschiebemittel (14, 15) wenigstens einer Drehscheibe (12, 13) und vorzugsweise nur einer Drehscheibe (12, 13) in axialer Richtung gegen eine Vorspannkraft von der gegenüberliegenden Drehscheibe (13 bzw. 12) entfernbar gelagert ist, und daß die beweglich gelagerten Axialverschiebemittel beim Eindrehen des Gassackes wenigstens radial innen ausweichen, wenn die auf den Gassack (11) ausgeübten Axialkräfte einen vorbestimmten Wert überschreiten.

15. Verfahren nach einem der Ansprüche 11 bis 14,
**dadurch gekennzeichnet,**
**daß** der Arbeitsabstand der Drehscheiben (12, 13) vor dem Eindrehen verändert und auf einen gewünschten Wert eingestellt wird und/oder
**daß** zwischen den Drehscheiben (12, 13) vorzugsweise radial außen abstandhaltende Schrauben (19) so eingestellt werden, daß die Drehscheiben (12, 13) den gewünschten Arbeitsabstand aufweisen und/oder
**daß** die Schrauben (19) in eine der Drehscheibe (12, 13) eingeschraubt werden und sich an der anderen Drehscheibe (13 bzw. 12) abstützen und/oder
**daß** die Drehscheiben (12, 13) radial innen an feststehenden Wellen (20, 21) dreh- und vorzugsweise auch axial verschiebbar gelagert werden, wobei vorzugsweise das Zentrum des Gassackes (11) an den Wellen (20, 21) vorzugsweise durch Klemmen befestigt wird.

16. Verfahren nach einem der Ansprüche 11 bis 15,
**dadurch gekennzeichnet,**
**daß** die beiden Drehscheiben (12, 13) synchron in ein und derselben Richtung drehbar sind und/oder
**daß** der Gassack (11) so weit eingedreht wird, daß das kompakte Gassackpaket (11') sich zumindest im wesentlichen vollständig im Aufnahmeraum (25) befindet und/oder
**daß** der Gassack (11) zunächst in einer Drehrichtung eingedreht wird, daß dann die Peripherhaltemittel (42) gegebenenfalls unter radialem Einfahren axial in Eingriff mit dem Außenbereich des bereits eingedrehten Bereichs des Gassackes (11) gebracht werden und daß anschließend der Peripherhaltemittel der Gassack weiter in der entgegengesetzten Richtung eingedreht wird.

## Claims

1. Method for the compact folding together of an airbag (11) of an airbag appliance in vehicles, in which a flatly arranged airbag (11), consisting of two flexible sheets (11a, 11b) which lie one on the other and are connected to one another on their circumference and one (11a) of which has a central orifice (23), preferably provided with an all-round reinforcement (22), for the connection of a gas generator, is laid out flat, in particular in a plane manner, is retained in the middle and, with the regions lying radially outside the middle, is twisted in at least one direction of rotation about an axis (24) running at least essentially perpendicularly to the laid-flat airbag (11) through the central retention region, until a compact airbag pack (11') is formed, **characterized in that** the flexible material of the laid-flat airbag (11), before being twisted, is displaced alternately in one axial direction and the other, as seen in the circumferential direction, by radial axial-displacement means (14, 15) distributed around the axis (24) and leaving a reception space (25) radially on the inside, in such a way that the airbag (11) follows a wave-like or zigzag-like path, as seen in the circumferential direction, the wave form and wave length being selected such that, during the synchronous rotation of the axial displacement means (14, 15) about the axis (24), those regions of the airbag (11) folded in a wave-like or a zigzag-like manner which lie radially outside the central retention region are at least essentially driven in a circumferential direction by the axial-displacement means (14, 15), and **in that**, subsequently, twisting takes place until, with the formation of radial folds pointing alternately in opposite axial directions, the compact airbag pack (11') is formed in the reception space (25) located radially within the axial-displacement means (14, 15).

2. Method according to Claim 1, **characterized in that** twisting takes place in only one direction of rotation, or **in that** twisting takes place alternately in one direction of rotation and the other, the already twisted part of the airbag (11) being held or secured against untwisting preferably before the reverse of the direction of rotation.

3. Method according to one of the preceding claims, **characterized in that** the compact airbag pack (11') is connected to a gas generator, is accommodated in a break-open container and is mounted in this form in the vehicle in the vicinity of occupant places.

4. Device for the compact folding together of an airbag (11) of an airbag appliance in vehicles, in which a flatly arranged airbag (11), consisting of two flexible sheets (12a, 11b) which lie one on the other and are connected to one another on their circumference and one of which has a central orifice (23), preferably provided with an all-round reinforcement (22), for the connection of a gas generator, is laid out flat, in particular in a plane manner, is retained in the middle by a clamping means (20, 21, 27) and, with the regions lying radially outside the middle, can be twisted in at least one direction, by pick-up means (14, 15) lying outside the retention region, about an axis (24) running at least essentially perpendicularly to the laid-flat airbag (11) through the central retention region, until a compact airbag pack (11') is formed, **characterized in that** the pick-up means provided are radial axial-displacement means (14, 15) which are distributed around the axis (24) and leave a reception space (25) radially on the inside and which, before twisting, displace the flexible material of the laid-flat airbag (11) alternately in one axial direction and the other, as seen in the circumferential direction, in such a way that the airbag (11) follows a wave-like or zigzag-like path, as seen in the circumferential direction, the wave form and wave length being selected such that, during the synchronous rotation of the axial-displacement means (14, 15) about the axis (24), those regions of the airbag (11) folded in a wave-like or zigzag-like manner which lie radially outside the central retention region are at least essentially driven in the circumferential direction by the axial-displacement means (14,15), and **in that** rotary propulsion means (12, 13, 38, 39) for the axial displacement means (14, 15) are provided, which twist the regions of the airbag (11) which lie radially outside the central retention region, until, with the formation of radial folds pointing alternately in opposite axial directions, the compact airbag pack (11') is formed in the reception space (25) located radially within the axial-displacement means (14, 15).

5. Device according to Claim 4, **characterized in that** the radial axial-displacement means consist of radial webs (14, 15) which point towards one another, are offset peripherally relative to one another and overlap one another axially and between which the spread-flat airbag (.11) can be arranged in such a way that the central region of the airbag (11) is retained and the outer regions lying radially outside the central region come to lie loosely between the radial webs (14, 15) in a wave-like or zigzag-like manner in the peripheral direction, preferably the radial webs (14, 15) being arranged on two preferably coaxially arranged rotary discs (12, 13), lying axially opposite one another with a clearance.

6. Device according to either one of Claims 4 or 5, **characterized in that** four to twelve, in particular six to ten, and preferably eight radial axial-displacement means (14, 15) are provided, distributed on the circumference, and/or **in that** the radial axial-displacement means (14, 15) are offset by the amount of essentially half a division, as seen in the circumferential direction, and/or **in that** the outside diameter of the circular arrangement of axial-displacement means (14, 15) or the diameter of the rotary discs (12, 13) is 60 to 100, in particular about 80 cm, and/or the axial height of the axial-displacement means (14, 15) is 4 to 8, in particular about 6 cm.

7. Device according to one of Claims 4 to 6, **characterized in that** the axial-displacement means (14, 15), if appropriate including the rotary discs (12, 13), can be moved axially away from one another for introduction of a laid-flat airbag (11) and towards one another, and/or **in that**, in the operating state, the rotary discs (12, 13) have an axial clearance relative to one another such that, between the axial-displacement means (14, 15) and the surface of the opposite rotary disc (12, 13), only a narrow gap (16) remains, which is just sufficient for the flat airbag (11) to fit through without jamming and with some play.

8. Device according to one of Claims 4 to 7, **characterized in that** the axial-displacement, means (14, 15) of at least one group, in particular of one rotary disc (12, 13), and preferably only of one group, in particular rotary disc (12, 13), are mounted so as to be capable of being removed in the axial direction from the opposite group, in particular rotary disc (13, 12), counter to a pre-stressing force, in such a way that the movably mounted axial-displacement means (14, 15) can shift axially at least radially on the inside when the axial forces exerted on the airbag (11) during twisting overshoot a predetermined value, and/or **in that** the moveably mounted axial-displacement means (14, 15) are mounted so as to be rotatable radially on the outside about peripherally directed axes (45), in particular on the assigned rotary disc (12, 13), and preferably projecting into radial slots (17) in the assigned rotary disc (12, 13) , preferably the pre-stressing force being a spring force or gravitational force, **in that** the group of movably mounted axial-displacement means (14, 15), in particular the rotary disc (12, 13) having removably mounted axial-displacement means (14, 15), is arranged above the other group, in particular the other rotary disc (13 or 12).

9. Device according to one of Claims 4 to 8, **characterized in that** the operating clearance of the axial-displacement means (14, 15) or of the rotary discs (12, 13) carrying the latter can be varied or can be set, spacers (19) preferably capable of being set radially on the outside extending preferably between the rotary discs (12, 13) and being designed preferably as spacing screws (19), in particular the spacers (19) being arranged axially adjustably in one rotary disc (13) and being supported on the other rotary disc (12).

10. Device according to one of Claims 5 to 9, **characterized in that** the rotary discs (12, 13) are mounted rotatably and preferably also axially displaceably, radially on the inside, on stationary shafts (20, 21), preferably the centre of the airbag (11) being capable of being secured between end faces of the shafts (20, 21).

11. Device according to one of Claims 4 to 10, **characterized in that** the axial-displacement means (14, 15), if appropriate together with the rotary discs (12, 13), are rotatable synchronously about the central axis (24) which extends perpendicularly to the spread-flat airbag (11), and/or **in that** peripheral holding means (42) are provided, which in each case, after a predetermined twisting phase, can be brought into engagement with the already twisted part of the airbag, in such a way that, subsequently, further twisting can take place in the opposite direction of rotation, without the already twisted part of the airbag (11) being untwisted again, preferably each upper radial web (15) being assigned a peripheral holding means (42) and, in particular, the axial holding means being capable of consisting of fixing pins (42) which, during the first twisting action, are located above the airbag (11) and out of engagement with the latter and, for fixing the twisted part of the airbag (11) peripherally, can be moved axially into engagement with the twisted part of the airbag, preferably the peripheral holding means (42) being arranged so as to be movable both axially and radially from the outside inwards.

12. Method according to one of Claims 1 to 3 to be carried out by means of a device according to one of Claims, 4 to 11, **characterized in that** the spread-flat airbag (11) is introduced between two rotary discs (12, 13) which lie axially opposite one another with a clearance and are preferably arranged coaxially to one another and which have radial webs (14, 15) which point toward one another, are offset peripherally relative to one another and overlap one another axially, **in that** the central region of the airbag (11) is retained and the outer regions lying radially outside the central region are arranged loosely between the rotary discs (12, 13) and the radial webs (14, 15) in a wave-like or zigzag-like manner in the peripheral direction, and **in that**, subsequently, the two rotary discs (12, 13) are rotated synchronously in at least one direction, until the compact airbag pack (11') is formed in the reception space (25).

13. Method according to Claim 12, **characterized in that** the wave-shaped elevations and depressions of the airbag (11) are distributed uniformly over the circumference, and/or **in that** the elevations and depressions of the airbag (11) are arranged so as to be offset by the amount of essentially half a division in a circumferential direction, and/or **in that** the diameter of the rotary discs (12, 13) is adapted to the diameter of the spread-flat airbag (11), and **in that** preferably the diameter of the spread-flat airbag (11) is 60 to 100 and, in particular, about 80 cm, in particular the elevations and depressions of the airbag (11) being capable of having an axial interval of 4 to 8, and in particular, about 6 cm.

14. Method according to one of Claims 11 to 13, **characterized in that** the rotary discs (12, 13) are moved axially away from one another for the introduction of an airbag (11) and then towards one another, and/or **in that** the rotary discs (12, 13) are set at a clearance such that, between the axial-displacement means (14, 15) and the surface of the opposite rotary disc (13 or 12), only a narrow gap (16) remains, which is just sufficient for the flat airbag (11) to fit through without jamming and with some play, and/or **in that** the axial-displacement means (14, 15) of at least one rotary disc (12, 13) and preferably of one rotary disc (12, 13) is mounted so as to be capable of being removed from the opposite rotary disc (13 or 12) in the axial direction counter to a pre-stressing force, and **in that**, during the twisting of the airbag, the movably mounted axial-displacement means shift .at least radially on the inside when the axial forces exerted on the airbag (11) overshoot a predetermined value.

15. Method according to one of Claims 11 to 14, **characterized in that**, before twisting, the operating clearance of the rotary discs (12, 13) is varied and is set at a desired value, and/or **in that** screws (19) spacing between the rotary discs (12, 13) preferably radially on the outside are set in such a way that the rotary discs (12, 13) have the desired operating clearance, and/or **in that** the screws (19) are screwed into one of the rotary discs (12, 13) and are supported on the other rotary disc (13, or 12), and/or **in that** the rotary discs (12, 13) are mounted rotatably and preferably also axially displaceably, radially on the inside, on stationary shafts (20, 21), preferably the centre of the airbag (11) being fastened to the shafts (20, 21) preferably by clamping.

16. Method according to one of Claims 11 to 15, **characterized in that** the two rotary discs (12, 13) are rotatable synchronously in one and the same direction, and/or **in that** the airbag (11) is twisted to an extent such that the compact airbag pack (11') is located at least essentially completely in the reception space (25), and/or **in that** the airbag (11) is first twisted in one direction of rotation, **in that** the peripheral holding means (42), if appropriate being moved in radially, are then brought axially into engagement with the outer region of the already twisted region of the airbag (11), and **in that**, subsequently to the peripheral holding means, the airbag is twisted further in the opposite direction.

## Revendications

1. Procédé de pliage compact d'un sac gonflable (11) d'un dispositif airbag dans des véhicules, dans lequel un sac gonflable (11) disposé à plat, composé de deux feuilles souples (11a, 11b) superposées et reliées l'une à l'autre sur leur circonférence, dont l'une (11a) présente une ouverture centrale (23), de préférence munie d'un renfort sur son pourtour, destinée au raccordement d'un générateur de gaz, est étalé à plat, en particulier de niveau, maintenu en son milieu et introduit en vrillant les zones situées radialement à l'extérieur du milieu autour d'un axe (24) au moins sensiblement perpendiculaire au sac gonflable (11) à plat et passant par la zone de maintien centrale afin de former un ensemble sac gonflable compact (11'),
**caractérisé en ce que**
la matière souple du sac gonflable (11) à plat est déplacée avant le vrillage par des moyens de déplacement axial (14, 15) radiaux répartis en laissant radialement à l'intérieur un logement (25) autour de l'axe (24) alternativement dans l'une et l'autre des directions axiales vues dans le sens de la circonférence, de telle sorte que le sac gonflable (11), vu dans le sens de la circonférence, prend une allure ondulée ou en accordéon, la forme et la longueur de l'ondulation étant choisies de façon que, lors d'une rotation synchrone des moyens de déplacement axial (14, 15) autour de l'axe (24), les zones du sac gonflable (11) plié ondulé ou en accordéon qui se trouvent radialement à l'extérieur de la zone de fixation centrale sont entraînées au moins sensiblement dans le sens de la circonférence par les moyens de déplacement axial (14, 15) et **en ce que** le vrillage, avec formation de plis radiaux dirigés alternativement dans des directions axiales opposées, se fait ensuite à l'intérieur du logement (25) qui se trouve axialement à l'intérieur des moyens de déplacement axial (14, 15) jusqu'à former l'ensemble sac gonflable compact (11').

2. Procédé selon la revendication 1, **caractérisé en ce que** le vrillage se fait dans un seul sens de rotation ou bien alternativement dans un sens de rotation et dans l'autre, la partie du sac gonflable (11) déjà vrillée étant de préférence maintenue ou protégée contre le dévrillage avant de changer le sens de rotation.

3. Procédé selon l'une des revendications précédentes, **caractérisé en ce que** l'ensemble sac gonflable compact (11') est relié à un générateur de gaz, placé dans un conteneur défonçable et monté sous cette forme au voisinage de places où se trouvent des personnes dans le véhicule.

4. Dispositif de pliage compact d'un sac gonflable (11) d'un dispositif airbag dans des véhicules, dans lequel un sac gonflable (11) disposé à plat, composé de deux feuilles souples (11a, 11b) superposées et reliées l'une à l'autre sur leur circonférence, dont l'une (11a) présente une ouverture centrale (23), de préférence munie d'un renfort sur son pourtour, destinée au raccordement d'un générateur de gaz, est étalé à plat, de préférence de niveau, maintenu en son milieu par des moyens de fixation (20, 21, 27) et pouvant être introduit en vrillant les zones situées radialement à l'extérieur du milieu autour d'un axe (24) au moins sensiblement perpendiculaire au sac gonflable (11) à plat et passant par la zone de maintien centrale jusqu'à former un ensemble sac gonflable compact (11'),
**caractérisé en ce que**
il est prévu en tant que moyens de préhension des moyens de déplacement axial (14, 15) radiaux répartis en laissant radialement à l'intérieur un logement (25) autour de l'axe (24) qui déplacent la matière souple du sac gonflable (11) à plat avant le vrillage alternativement dans l'une et l'autre des directions axiales vues dans le sens de la circonférence, de telle sorte que le sac gonflable (11), vu dans le sens de la circonférence, prend une allure ondulée ou en accordéon, la forme et la longueur de l'ondulation étant choisies de façon que, lors d'une rotation synchrone des moyens de déplacement axial (14, 15) autour de l'axe (24), les zones du sac gonflable (11) plié ondulé ou en accordéon qui se trouvent radialement à l'extérieur de la zone de fixation centrale sont entraînées au moins sensiblement dans le sens de la circonférence par les moyens de déplacement axial (14, 15) et **en ce que** le vrillage, avec formation de plis radiaux dirigés alternativement dans des directions axiales opposées, se fait ensuite à l'intérieur du logement (25) qui se trouve axialement à l'intérieur des moyens de déplacement axial (14, 15) jusqu'à former l'ensemble sac gonflable compact (11').

5. Dispositif selon la revendication 4, **caractérisé en ce que** les moyens de déplacement axial se composent de nervures radiales (14, 15) dirigées les unes vers les autres, décalées les unes par rapport aux autres sur la périphérie et se chevauchant axialement les unes les autres, entre lesquelles le sac gonflable (11) à plat peut être disposé de telle sorte que la zone centrale du sac gonflable (11) soit maintenue et que les zones externes situées à l'extérieur de la zone centrale viennent se placer de manière lâche sous forme ondulée ou en accordéon dans le sens de la circonférence entre les nervures radiales (14, 15), les nervures radiales (14, 15) étant de préférence disposées sur deux plateaux tournants (12, 13) se faisant face à une certaine distance axiale, de préférence disposés coaxialement.

6. Dispositif selon l'une des revendications 4 ou 5, **caractérisé en ce que**
il est prévu, répartis sur la circonférence, de quatre à douze, en particulier de six à dix et de préférence huit moyens radiaux de déplacement axial (14, 15), et/ou
**en ce que** les moyens de déplacement axial (14, 15) disposés radialement, vus dans le sens de la circonférence, sont décalés de sensiblement un demi pas, et/ou
**en ce que** le diamètre extérieur de l'agencement circulaire des moyens de déplacement axial (14, 15) ou le diamètre des plateaux tournants (12, 13) mesure de 60 à 100 cm, en particulier environ 80 cm, et/ou la hauteur axiale des moyens de déplacement axial (14, 15) mesure de 4 à 8 cm, en particulier environ 6 cm.

7. Dispositif selon l'une des revendications 4 à 6, **caractérisé en ce que**
les moyens de déplacement axial (14, 15), y compris le cas échéant les plateaux tournants (12, 13), sont mobiles de façon à pouvoir être éloignés ou rapprochés axialement les uns des autres afin d'introduire un sac gonflable (11) à plat, et/ou
**en ce que**, en position de travail, les plateaux tournants (12, 13) se trouvent à une distance axiale l'un de l'autre telle qu'il subsiste seulement entre les moyens de déplacement axial (14, 15) et la surface du plateau tournant (12, 13) opposé une fente étroite (16) qui est juste suffisante pour que le sac gonflable (11) à plat puisse passer à travers sans se coincer et avec un peu de jeu.

8. Dispositif selon l'une des revendications 4 à 7, **caractérisé en ce que**
les moyens de déplacement axial (14, 15) d'au moins un groupe, en particulier un plateau tournant (12, 13), et de préférence d'un seul groupe, en particulier un plateau tournant (12, 13), sont supportés de manière à pouvoir s'écarter dans le sens axial contre une force de précontrainte du groupe opposé, en particulier un plateau tournant (12, 13), de telle façon que les moyens de déplacement axial (14, 15) supportés de manière mobile peuvent se déporter au moins radialement vers l'intérieur lorsque les forces axiales exercées sur le sac gonflable (11) lors du vrillage dépassent une valeur prédéterminée, et/ou
**en ce que** les moyens de déplacement axial (14, 15) supportés de manière mobile sont supportés sur le plateau tournant (12, 13) qui leur est affecté de façon à pouvoir tourner autour d'axes (45) dirigés radialement vers l'extérieur sur la circonférence et de préférence dépassent dans des fentes radiales (17) du plateau tournant (12, 13) affecté, la force de précontrainte étant de préférence la force d'un ressort ou la force de la pesanteur, en disposant le groupe des moyens de déplacement axial (14, 15) supportés de manière mobile, en particulier le plateau tournant (12, 13) avec les moyens de déplacement axial (14, 15) au-dessus de l'autre groupe, en particulier l'autre plateau tournant (13 ou 12).

9. Dispositif selon l'une des revendications 4 à 8, **caractérisé en ce que**
la distance de travail des moyens de déplacement axial (14, 15) ou des plateaux tournants (12, 13) qui les portent est modifiable ou réglable, des entretoises réglables (19), réalisées de préférence sous la forme de vis entretoises (19), s'étendant de préférence radialement à l'extérieur, de préférence entre les plateaux tournants (12, 13), les entretoises (19) étant en particulier disposées dans l'un des plateaux tournants (13) de manière à pouvoir être ajustées axialement et s'appuyant sur l'autre plateau tournant (12).

10. Dispositif selon l'une des revendications 5 à 9, **caractérisé en ce que**
les plateaux tournants (12, 13) sont supportés radialement à l'intérieur de façon à pouvoir tourner et de préférence également se déplacer axialement sur des arbres fixes (20, 21), le centre du sac gonflable (11) pouvant être fixé entre les extrémités des arbres (20, 21).

11. Dispositif selon l'une des revendications 4 à 10, **caractérisé en ce que**
les moyens de déplacement axial (14, 15), le cas échéant avec les plateaux tournants (12, 13), peuvent tourner de manière synchrone autour d'un axe central (24) qui s'étend perpendiculairement au sac gonflable (11) étalé à plat, et/ou
**en ce qu'**il est prévu des moyens de maintien,périphérique (42) qui, après une phase de vrillage prédéterminée, peuvent être amenés en prise avec la partie déjà vrillée du sac gonflable de façon à pouvoir effectuer ensuite un vrillage supplémentaire dans le sens de rotation opposé sans dévrillage de la partie déjà vrillée du sac gonflable (11), un moyen de maintien périphérique (42) étant de préférence affecté à chaque nervure radiale supérieure (15) et les moyens de maintien axial pouvant notamment être constitués par des doigts de fixation (42) qui, pendant la première opération de vrillage, se trouvent au-dessus du sac gonflable (11) et non en prise avec celui-ci, et qui peuvent être déplacés axialement pour venir en prise avec la partie vrillée du sac gonflable afin de fixer périphériquement la partie vrillée du sac gonflable (11), les moyens de maintien périphérique (42) étant de préférence disposés de manière à pouvoir se déplacer tant axialement que radialement de l'extérieur vers l'intérieur.

12. Procédé selon l'une des revendications 1 à 3 destiné à être réalisé avec un dispositif selon l'une des revendications 4 à 11, **caractérisé en ce que**
le sac gonflable (11) étalé à plat est introduit entre deux plateaux tournants (12, 13) se faisant face à une certaine distance axiale, de préférence disposés coaxialement l'un par rapport à l'autre, avec des nervures radiales (14, 15) dirigées les unes vers les autres, décalées les unes par rapport aux autres sur la périphérie et se chevauchant les unes les autres, **en ce que** la zone centrale du sac gonflable (11) est maintenue et les zones externes situées radialement à l'extérieur de la zone centrale sont disposées de manière ondulée ou en accordéon dans le sens de la circonférence entre les plateaux tournants (12, 13) et les nervures radiales (14, 15), et **en ce que** les deux plateaux tournants (12, 13) sont ensuite mis en rotation de manière synchrone dans au moins une direction jusqu'à ce que l'ensemble sac gonflable compact (11') soit formé dans le logement (25).

13. Procédé selon la revendication 12, **caractérisé en ce que**
les bosses ou les creux de forme ondulée du sac gonflable (11) sont uniformément réparti(e)s sur la circonférence, et/ou
**en ce que** les bosses et les creux du sac gonflable (11) sont disposé(e)s de manière décalée de pratiquement un demi pas dans le sens de la circonférence, et/ou
**en ce que** le diamètre des plateaux tournants (12, 13) est adapté au diamètre du sac gonflable (11) étalé à plat et **en ce que** le diamètre du sac gonflable (11) étalé à plat mesure de préférence de 60 à 100 cm, de préférence environ 80 cm, les bosses et les creux du sac gonflable (11) pouvant notamment avoir un écartement axial de 4 à 8 cm, en particulier d'environ 6 cm.

14. Procédé selon l'une des revendications 11 à 13, **caractérisé en ce que**
les plateaux tournants (12, 13) peuvent être écartés axialement pour y introduire un sac gonflable (11) et ensuite rapprochés l'un de l'autre, et/ou
**en ce que** les plateaux tournants (12, 13) peuvent être ajustés à une distance telle qu'il subsiste seulement entre les moyens de déplacement axial (14, 15) et la surface du plateau tournant (13 ou 12) opposé une fente étroite (16) qui est juste suffisante pour que le sac gonflable (11) à plat puisse passer à travers sans se coincer et avec un peu de jeu, et/ou
**en ce que** les moyens de déplacement axial (14, 15) d'au moins un plateau tournant (12, 13), et de préférence d'un seul plateau tournant (12, 13), sont supportés de manière à pouvoir s'écarter dans le sens axial contre une force de précontrainte du plateau tournant (13 ou 12) opposé et **en ce que** les moyens de déplacement axial supportés de manière mobile peuvent se déporter au moins radialement vers l'intérieur lorsque les forces axiales exercées sur le sac gonflable (11) lors du vrillage dépassent une valeur prédéterminée

15. Procédé selon l'une des revendications 11 à 14, **caractérisé en ce que**
la distance de travail des plateaux tournants (12, 13) est modifiée avant le vrillage et ajustée à une valeur voulue, et/ou
**en ce que**, entre les plateaux tournants (12, 13), des vis entretoises (19) de préférence disposées radialement à l'extérieur sont ajustées de telle façon que les plateaux tournants (12, 13) se trouvent à la distance de travail voulue, et/ou
**en ce que** les vis (19) sont vissées dans l'un des plateaux tournants (12, 13) et s'appuient sur l'autre plateau tournant (13 ou 12), et/ou
**en ce que** les plateaux tournants (12, 13) sont supportés radialement à l'intérieur de façon à pouvoir tourner et de préférence également se déplacer axialement sur des arbres fixes (20, 21), le centre du sac gonflable (11) pouvant être fixé sur les arbres (20, 21), de préférence au moyen de pinces.

16. Procédé selon l'une des revendications 11 à 15, **caractérisé en ce que**
les deux plateaux tournants (12, 13) peuvent être mis en rotation de manière synchrone dans une seule et même direction, et/ou
**en ce que** le sac gonflable (11) est vrillé jusqu'à ce que l'ensemble sac conflable compact (11') se trouve au moins pratiquement en totalité dans le logement (25), et/ou
**en ce que** le sac gonflable (11) est d'abord vrillé dans un sens de rotation, **en ce que** les moyens de maintien périphérique (42), le cas échéant avec une entrée radiale, sont ensuite amenés axialement en prise avec la zone externe de la partie déjà vrillée du sac gonflable (11) et **en ce que** l'on fait ensuite tourner le moyen de maintien périphérique du sac gonflable dans le sens inverse.
